# EUROPÄISCHE PATENTANMELDUNG

(11) **EP 0 862 049 A2**
(43) Veröffentlichungstag der Anmeldung: **02.09.1998**
(21) Anmeldenummer: 98103295.6
(22) Anmeldetag: 25.02.1998
(51) Int. Cl.: G01H 11/06

(54) **Vibrationssensor**

(30) Priorität: 28.02.1997 DE 19708257
(71) Anmelder: KRIWAN INDUSTRIE-ELEKTRONIK GMBH, 74670 Forchtenberg (DE)
(72) Erfinder: Kriwan, Friedrich, 74670 Forchtenberg (DE)
(74) Vertreter: Tetzner, Michael

(57) **Zusammenfassung**

Die Erfindung betrifft einen Vibrationssensor für ein zu überwachendes Gerät, der ein Gehäuse (1) aufweist, in dem ein Kontaktkörper (2) freischwingend angeordnet ist, der bei auftretenden Vibrationen des zu überwachenden Gerätes mit einem Kontaktelement (3) am Gehäuse (1) in Berührung kommt und bei jeder Berührung einen elektrischen Impuls auslöst. Ferner wirkt mit dem Gehäuse (1) eine elektrische Schaltung zusammen, die in Abhängigkeit der erzeugten elektrischen Impulse ein Ausgangssignal zur Steuerung des zu überwachenden Gerätes liefert. Das Gehäuse (1) ist über eine Halterungsvorrichtung (7,8) mit der elektrischen Schaltung gekoppelt, wobei das Gehäuse auswechselbar in der Halterungsvorrichtung (7,8) gehaltert ist.

## Beschreibung

Die Erfindung betrifft einen Vibrationssensor für ein zu überwachendes Gerät.

Vibrationssensoren werden insbesondere bei empfindlichen Geräten eingesetzt, die bei zu starken Vibrationen fehleranfällig werden oder bei denen es sogar zu bleibenden Defekten kommt. Vibrationssensoren sind daher vielfach so ausgelegt, daß sie das zu überwachende Gerät bei Auftreten von zu starken Vibrationen abschalten.

Aus der Praxis sind beispielsweise piezoelektrisch arbeitende Sensoren bekannt. Auch die Verwendung einer Quecksilberschaltröhre kommt zum Einsatz.

Aus der JP-A 08 029 246 und der JP-A 63-263 424 sind Vibrationssensoren für ein zu überwachendes Gerät bekannt, die ein Gehäuse aufweisen, in dem ein Kontaktkörper freischwingend angeordnet ist, der bei auftretenden Vibrationen des zu überwachenden Gerätes mit einem Kontaktelement am Gehäuse in Berührung kommt und bei jeder Berührung einen elektrischen Impuls auslöst, und ferner das Gehäuse mit einer elektrischen Schaltung zusammenwirkt, die in Abhängigkeit der erzeugten elektrischen Impulse ein Ausgangssignal zur Steuerung des zu überwachenden Gerätes liefert.

Der Erfindung liegt die Aufgabe zugrunde, einen Vibrationssensor für ein zu überwachendes Gerät anzugeben, bei dem das Ansprechen des Vibrationssensors auf besonders einfache Weise an das zu überwachende Gerät angepaßt werden kann.

Erfindungsgemäß wird diese Aufgabe durch die Merkmale des Anspruches 1 gelöst.

Weitere Ausgestaltungen der Erfindung sind Gegenstand der Unteransprüche.

Erfindungsgemäß ist das Gehäuse über eine Halterungsvorrichtung mit der elektrischen Schaltung gekoppelt, wobei das Gehäuse auswechselbar in der Halterungsvorrichtung gehaltert ist.

In einem bevorzugten Ausführungsbeispiel weist die Halterungsvorrichtung Klipse zum Einschnappen des Gehäuses auf.

Das Gehäuse wird bevorzugt durch ein Glasröhrchen gebildet, dessen beide Enden mit Metallkappen verschlossen sind. Der Kontaktkörper ist über ein Verbindungselement an einer der beiden Metallkappen befestigt und das Kontaktelement ist mit der anderen Metallkappe verbunden, wobei die Metallkappen, das Verbindungselement, der Kontaktkörper sowie das Kontaktelement aus elektrisch leitendem Material bestehen, so daß bei einer Berührung von Kontaktkörper und Kontaktelement eine elektrische Verbindung zwischen den beiden Metallkappen hergestellt wird.

Indem man zwischen Kontaktkörper und Kontaktelement eine Spannung von wenigstens 24 V bzw. vorteilhafter direkt die gleichgerichtete Netzspannung anlegt, werden durch die Berührung von Kontaktkörper und Kontaktelement etwaige Oxidationen oder Verschmutzungen im Berührungsbereich überwunden, so daß auf eine Vergoldung von Kontaktkörper und Kontaktelemente verzichtet werden kann.

In einem bevorzugten Ausführungsbeispiel weist die elektrische Schaltung einen Kondensator auf, der durch die elektrischen Impulse aufladbar ist und ferner mit einer Gasentladungsröhre zusammenwirkt, die bei einer ausreichenden Aufladung des Kondensators gezündet wird und dabei das Ausgangssignal erzeugt.

Erzeugt die Gasentladungsröhre beim Zünden ein optisches Signal, könnte dieses zur Erzeugung des Ausgangssignals von einem Optoelement aufgenommen werden. Bei dieser Konstellation findet eine potentialfreie Übertragung von der am Gehäuse anliegenden relativ hohen Spannung zu dem mit Niederspannung arbeitenden Optoelement statt.

Weitere Vorteile der Erfindung werden anhand der Beschreibung eines Ausführungsbeispieles und der Zeichnung näher erläutert.

In der Zeichnung zeigen
- Fig.1: eine schematische Darstellung des Gehäuses mit Kontaktkörper und Kontaktelement,
- Fig.2: eine Prinzipschaltung der mit dem Gehäuse zusammenwirkenden elektrischen Schaltung,
- Fig.3: eine Kennlinie, die die Aufladung des Kondensators in Abhängigkeit der elektrischen Impulse zeigt und
- Fig.4: eine Kennlinie der Gasentladungsröhre.

Der Vibrationssensor weist ein Gehäuse 1 auf, in dem ein Kontaktkörper 2 freischwingend angeordnet ist, der bei auftretenden Vibrationen eines zu überwachenden Gerätes mit einem Kontaktelement 3 in Berührung kommt.

Das Gehäuse 1 besteht beispielsweise aus einem Glasröhrchen, dessen beide Enden mit Metallkappen 4, 5 verschlossen sind.

Der Kontaktkörper 2 wird beispielsweise durch eine Metallkugel gebildet, die über ein Verbindungselement 6 an der einen Metallkappe 4 befestigt ist. Das Verbindungselement 6 wird beispielsweise durch ein Federelement oder einen verhältnismäßig steifen Draht gebildet. Das Verbindungselement 6 muß jedenfalls gewährleisten, daß der Kontaktkörper 2 in der Ruhelage nicht mit dem Kontaktelement 3 in Verbindung kommt. Je nach Ausgestaltung könnte das Kontaktelement 3 auch durch die Metallkappe 5 gebildet werden.

Das Gehäuse wird in einer Halterungsvorrichtung gehaltert, die im dargestellten Ausführungsbeispiel durch zwei Klipse 7 und 8 gebildet wird, so daß das Gehäuse im Bereich seiner Metallkappen 4 und 5 in die Klipse 7, 8 eingeschnappt werden kann.

Die Metallkappe, das Verbindungselement 6, der Kontaktkörper 2, das Kontaktelement 3 und die Metallkappe 5 bestehen aus elektrisch leitendem Material, wobei die Metallkappe 4 und das Verbindungselement 6 bzw. das Kontaktelement 3 und die Metallkappe 5 derart miteinander verbunden sind, daß bei einer Berührung von Kontaktkörper 2 und Kontaktelement 3 eine elektrische Verbindung zwischen den beiden Metallkappen 4 und 5 hergestellt wird.

Das Kontaktelement 3 wird derart um den Kontaktkörper 2 angeordnet, daß es in jeder möglichen Schwingungsrichtung des Kontaktkörpers zu einer Berührung mit dem Kontaktelement 3 kommen kann.

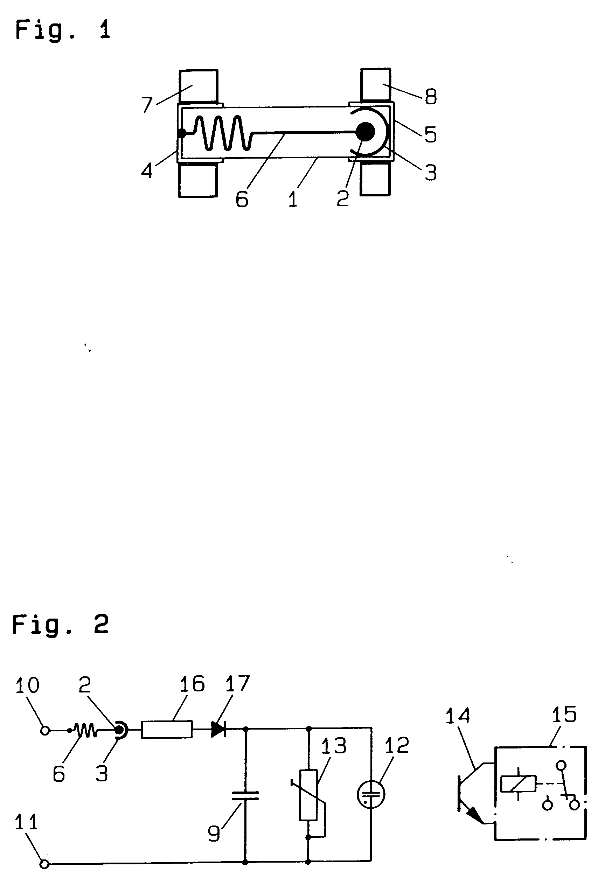

Der Vibrationssensor weist neben dem anhand von Fig.1 beschriebenen Gehäuse 1 mit Kontaktkörper 2 und Kontaktelement 3 auch eine mit diesem zusammenwirkenden elektrische Schaltung auf. Wird der Vibrationssensor bei einem zu überwachenden Gerät eingesetzt und treten Vibrationen auf, so kommt der Kontaktkörper 2 immer wieder mit dem Kontaktelement 3 in Berührung und löst einen elektrischen Impuls aus, wobei in der zusammenwirkenden elektrischen Schaltung - in Abhängigkeit der erzeugten elektrischen Impulse - ein Ausgangssignal zur Steuerung des zu überwachenden Gerätes erzeugt wird.

Eine besonders vorteilhafte Ausgestaltung der Erfindung ist dann gegeben, wenn das Gehäuse 1 des Vibrationssensors zylindrisch ausgebildet ist und einen Durchmesser von 5 mm sowie eine Länge von 20 mm aufweist. Diese Abmessungen entsprechen den allgemein bekannten und standardisisierten Feinsicherungen. Es könnten daher für die Halterungsvorrichtung des Gehäuses im Handel erhältliche Standardhalterungen verwendet werden. Es könnten jedoch auch andere handelsübliche Halter zum Einlöten auf Leiterplatten oder auch Halter für eine vertikale oder auch horizontale Montage verwendet werden.

Je nach Stärke der Vibrationen entstehen unregelmäßige Kontaktfolgen zwischen Kontaktkörper 2 und Kontaktelement 3, die in einem bestimmten Verhältnis zur Vibrationsstärke stehen. Die Impulsfolge wird dabei insbesondere durch die Steifigkeit des Verbindungselementes 6 und die Masse des Kontaktkörpers 2 bestimmt. Es lassen sich daher durch Variation dieser beiden Parameter Vibrationssensoren mit unterschiedlichen Ansprechempfindlichkeiten herstellen.

Die Halterungsvorrichtung für das Gehäuse 1 ist derart ausgebildet, daß das Gehäuse lediglich eingeschnappt werden muß, so daß sich ein Austausch des Gehäuses besonders einfache realisieren läßt. Auf diese Weise kann man das Ansprechen des Vibrationssensors auf besonders einfache Weise an das zu überwachende Gerät anpassen. Zweckmäßigerweise wird man die Ansprechempfindlichkeit durch eine entsprechende Markierung am Gehäuse kennzeichnen.

Je nach Ausgestaltung des Verbindungselementes 6 und des Kontaktkörpers 2 läßt sich das Gehäuse nicht nur senkrecht, d.h. in Richtung der Längserstreckung des Verbindungselementes, sondern auch waagrecht hierzu anordnen. Durch eine Parallelschaltung mehrerer derartiger Vibrationssensoren könnte man mehrere Schwingungsachsen überwachen.

Man könnte auch daran denken, Vibrationssensoren mit unterschiedlicher Ansprechempfindlichkeit zu verwenden, wobei der eine Vibrationssensor zur Vorwarnung und der andere zur Abschaltung des zu überwachenden Gerätes eingesetzt werden könnte.

Die elektrische Schaltung gemäß Fig.2 weist insbesondere einen Kondensator 9 auf, der durch die im Gehäuse erzeugten elektrischen Impulse aufladbar ist. Zu diesem Zweck wird zwischen den Eingangsklemmen 10, 11 der elektrischen Schaltung eine gleichgerichtete Spannung von wenigstens 24 V angelegt.

Bei der Berührung von Kontaktkörper 2 und Kontaktelement 3 entstehen elektrische Impulse, die den Kondensator 9 aufladen. In Abhängigkeit einer bestimmten Aufladung des Kondensators läßt sich dann das Ausgangssignal generieren.

Im dargestellten Ausführungsbeispiel ist hierfür eine Gasentladungsröhre 12 vorgesehen, die beispielswiese als Glimmlampe ausgebildet ist. Eine solche Gasentladungsröhre hat die Eigenschaft, daß sie bei Erreichen der Zündspannung U_{Z} zündet und dabei kurz aufleuchtet. Dieser Effekt kann hier vorteilhaft ausgenutzt werden, indem man die Gasentladungsröhre 12 parallel zum Kondensator 9 schaltet. Erreicht der Kondensator die Zündspannung der Gasentladungsröhre, wird diese gezündet und der Kondensator bis zur sogenannten Löschspannung U_{L} der Gasentladungsröhre entladen. Daraufhin baut sich die Spannung des Kondensators bei weiteren Berührungen von Kontaktkörper 2 und Kontaktelement 3 wieder auf. Bei Verwendung einer Glimmlampe benötigt man zwischen den Eingangsklemmen 10, 11 eine Spannung von wenigstens 85 V, um den Kondensator bis zur Zündspannung der Glimmlampe aufladen zu können.

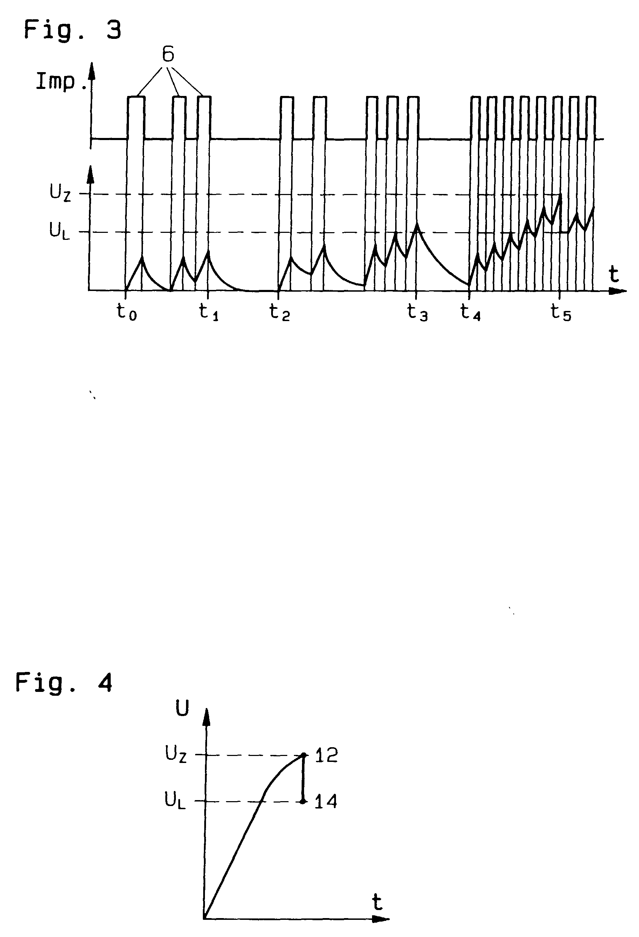

In Fig.3 ist der Ladevorgang des Kondensators in Abhängigkeit der durch den Kontaktkörper 2 und das Kontaktelement 3 erzeugten Impulse dargestellt. Hierbei ist zu berücksichtigen, daß sich der Kondensator im Zeitintervall zwischen zwei Impulsen allmählich entlädt, wobei die Geschwindigkeit der Entladung durch einen parallelgeschalteten variablen Entladungswiderstand einstellbar ist. Die Auswirkungen durch einen unterschiedlichen Entladungswiderstand sind in der Kennlinie gemäß Fig.3 für den Zeitabschnitt zwischen t₁ und t₂ in Form von zwei Linien dargestellt.

Der Effekt, daß sich der Kondensator zwischenzeitlich wieder entlädt, ist jedoch durchaus wünschenswert, da es hierdurch zu einer unterschiedlichen Aufladung des Kondensators kommt, wenn die Impulse im kürzeren bzw. längeren Abstand aufeinander folgen. Ein bedenklicher Zustand des zu überwachenden Gerätes ergibt sich vielfach erst dann, wenn eine hohe Impulsrate durch die Berührung von Kontaktkörper und Kontaktelement erzeugt wird.

Aus der Kennlinie gemäß Fig.3 ist daher auch deutlich zu erkennen, daß in dem Zeitabschnitt zwischen t₀ und t₃ zwar sieben Impulse erzeugt worden sind, jedoch die Aufladung des Kondensators noch nicht die Zündspannung U_{Z} erreicht hat. Zum Zeitpunkt t₄ ist die Spannung des Kondensators fast wieder auf 0 zurückgegangen. Bis zum Zeitpunkt t₅ kommt es jedoch zu einer raschen Impulsfolge, so daß sich der Kondensator bis zur Zündspannung U_{Z} auflädt und es zur Zündung der Gasentladungsröhre 12 kommt. Die Spannung am Kondensator fällt dann schlagartig bis auf die Löschspannung U_{L} der Gasentladungsröhre.

Man sieht hier auch deutlich, daß die Kondensatorspannung nach dem Zünden der Gasenetladungsröhre nicht wieder von 0 aus aufgeladen werden muß. Auch dieser physikalische Effekt wirkt sich positiv auf die Funktion des Vibrationssensors aus, weil es gerade beim Anlauf eines zu überwachenden Gerätes erwartungsgemäß zu stärkeren Vibrationen als im Dauerbetrieb kommt. Indem der Kondensator 9 am Anfang von 0 bis zur Zündspannung aufgeladen werden muß, kann hierdurch die Anlaufphase des Gerätes überbrückt werden, ohne daß es zu einem ungewolltem Abschalten kommt.

Mit Hilfe des einstellbaren Entladungswiderstandes 13 läßt sich zudem die Entladungsgeschwindigkeit des Kondensators einstellen, so daß auch hierdurch ein zu schnelles Aufladen des Kondensators verhindert werden kann.

Die Kennlinie gemäß Fig.4 zeigt die Spannungsverhältnisse an der Gasentladungsröhre 12, wobei es bei Erreichen der Zündspannung U_{Z} zu einem schlagartigen Spannungsabfall bis zur Löschspannung U_{L} kommt und es bei einer Glimmlampe gleichzeitig zu einer sichtbaren Gasentladung kommt. Diese kurze Aufleuchten kann auf ein geeignetes Optoelement 14, beispielsweise einen Phototransistor oder eine Photodiode, potentialgetrennt übertragen werden. Das Optoelement erzeugt dann ein Ausgangssignal, das über eine geeignete, mit 15 gekennzeichnete Elektronik beispielsweise ein Relais zur Abschaltung des zu überwachenden Gerätes steuert.

Der Vorteil dieser Optokopplung zwischen Gasentladungsröhre 12 und Optoelement 14 liegt darin, daß ein potentialfreies Übertragungselement zur Niederspannung im Bereich der Photodiode und der Elektronik 15 geschaffen wird. Es ist daher möglich, den ersten Teil der Schaltung, insbesondere mit dem Gehäuse, dem Kondensator und der Gasentladungsröhre, mit einer hohen Spannung, insbesondere mit der Netzspannung von 85 V, zu betreiben. Bei diesen relativ hohen Spannungen können etwaige Oxidationen oder Verschmutzungen im Bereich des Kontaktkörpers bzw. des Kontaktelementes überwunden werden. Es ist daher nicht erforderlich, den durch den Kontaktkörper 2 und das Kontaktelement 3 gebildeten Schaltkontakt zu vergolden.

Anstelle der Gasentladungsröhre könnte man beispielsweise auch eine bereits bei 24 V zündende Triggerdiode verwenden, die mit einem in Serie geschalteten Optoelement zusammenwirkt, um einen Lichtblitz zu erzeugen. Auch bei einem solchen Aufbau ist eine potentialfreie Entkopplung der beiden Schaltkreise möglich.

In der in Fig.2 gezeigten Prinzipschaltung sind das Verbindungselement 6, der Kontaktkörper 2 und das Kontaktelement 3 schematisch dargestellt, wobei die kurzen Impulse über einen Vorwiderstand 16 und einen Gleichrichter 17 zum Kondensator 9 gelangen.

## Patentansprüche

1. Vibrationssensor für ein zu überwachendes Gerät mit einem Gehäuse (1), in dem ein Kontaktkörper (2) freischwingend angeordnet ist, der bei auftretenden Vibrationen des zu überwachenden Gerätes mit einem Kontaktelement (3) am Gehäuse in Berührung kommt und bei jeder Berührung einen elektrischen Impuls auslöst, und ferner das Gehäuse mit einer elektrischen Schaltung zusammenwirkt, die in Abhängigkeit der erzeugten elektrischen Impulse ein Ausgangssignal zur Steuerung des zu überwachenden Gerätes liefert,
dadurch gekennzeichnet, daß das Gehäuse über eine Halterungsvorrichtung (7, 8) mit der elektrischen Schaltung gekoppelt ist, wobei das Gehäuse auswechselbar in der Halterungsvorrichtung gehaltert ist..

2. Vibrationssensor nach Anspruch 1, dadurch gekennzeichnet, daß die Halterungsvorrichtung Klipse (7, 8) zum Einschnappen des Gehäuses (1) aufweist.

3. Vibrationssensor nach Anspruch 1, dadurch gekennzeichnet, daß das Gehäuse (1) durch ein Glasröhrchen gebildet wird, dessen beide Enden mit Metallkappen (4, 5) verschlossen sind.

4. Vibrationssensor nach Anspruch 1, dadurch gekennzeichnet, daß das Gehäuse (1) zylindrisch ausgebildet ist und einen Durchmesser von 5 mm sowie eine Länge von 20 mm aufweist.

5. Vibrationssensor nach Anspruch 1, dadurch gekennzeichnet, daß das Gehäuse (1) durch ein Glasröhrchen gebildet wird, dessen beide Enden mit Metallkappen (4, 5) verschlossen sind, und der Kontaktkörper über ein Verbindungselement (6) an der einen Metallkappe (4) befestigt ist und das Kontaktelement (3) mit der anderen Metallkappe (5) verbunden ist, wobei die Metallkappen, das Verbindungselement, der Kontaktkörper und das Kontaktelement aus elektrisch leitendem Material bestehen, so daß bei einer Berührung von Kontaktkörper (2) und Kontaktelement (3) eine elektrische Verbindung zwischen den beiden Metallkappen (4, 5) hergestellt wird.

6. Vibrationssensor nach Anspruch 1, dadurch gekennzeichnet, daß das Gehäuse (1) eine Markierung aufweist, die die Ansprechempfindlichkeit des Vibrationssensors kennzeichnet.

7. Vibrationssensor nach Anspruch 1, dadurch gekennzeichnet, daß die elektrische Schaltung einen Kondensator (9) aufweist, der durch die elektrischen Impulse aufladbar ist und mit einer Gasentladungsröhre (12) zusammenwirkt, die bei einer ausreichenden Aufladung des Kondensators (9) gezündet wird und dabei das Ausgangssignal erzeugt.

8. Vibrationssensor nach Anspruch 1, dadurch gekennzeichnet, daß die elektrische Schaltung einen Kondensator (9) aufweist, der durch die elektrischen Impulse aufladbar ist und mit einer Gasentladungsröhre (12) zusammenwirkt, die bei einer ausreichenden Aufladung des Kondensators (9) gezündet wird und ein optisches Signal erzeugt und ferner ein Optoelement (14) vorgesehen ist, das das Ausgangssignal aufgrund des optischen Signals erzeugt.

9. Vibrationssensor nach Anspruch 1, dadurch gekennzeichnet, daß zwischen dem Kontaktkörper (2) und dem Kontaktelement (3) eine Spannung von wenigstens 24 V anliegt.

10. Vibrationssensor nach Anspruch 2, dadurch gekennzeichnet, daß parallel zum Kondensator (9) ein Entladewiderstand (13) geschaltet ist.
